# EUROPÄISCHE PATENTSCHRIFT

(11) **EP 1 088 379 B1**
(45) Veröffentlichungstag und Bekanntmachung des Hinweises auf die Patenterteilung: **06.03.2002**
(21) Anmeldenummer: 99938178.3
(22) Anmeldetag: 11.06.1999
(51) Int. Cl.: H01S 3/036, H01S 3/225

(54) **LICHTQUELLE, MIT EINEM EIN GAS EINSCHLIESSENDEN HOHLRAUM**
LIGHT SOURCE WITH A CAVITY INCLUDING A GAS
SOURCE LUMINEUSE COMPORTANT UNE CAVITE RENFERMANT UN GAZ

(30) Priorität: 16.06.1998 DE 19826701
(43) Veröffentlichungstag der Anmeldung: 04.04.2001
(73) Patentinhaber: TuiLaser AG, 82110 Germering (DE)
(72) Erfinder: HOHLA, Alexander, D-80798 München (DE)
(74) Vertreter: Rösler, Uwe, Dipl.-Phys.
(86) Internationale Anmeldenummer: DE9901718
(87) Internationale Veröffentlichungsnummer: WO9966609

(56) Entgegenhaltungen:
- DE-A- 4 441 199
- PATENT ABSTRACTS OF JAPAN vol. 013, no. 541 (E-854), 5. Dezember 1989 (1989-12-05) & JP 01 222493 A (MITSUBISHI ELECTRIC CORP), 5. September 1989 (1989-09-05)
- PATENT ABSTRACTS OF JAPAN vol. 1995, no. 07, 31. August 1995 (1995-08-31) & JP 07 106667 A (AMADA CO LTD), 21. April 1995 (1995-04-21)
- PATENT ABSTRACTS OF JAPAN vol. 018, no. 590 (E-1628), 10. November 1994 (1994-11-10) & JP 06 224495 A (AMADA CO LTD), 12. August 1994 (1994-08-12)

## Beschreibung

### Technisches Gebiet

Die Erfindung bezieht sich auf eine Lichtquelle, mit einem, ein Gas einschließenden Hohlraum, der von dem Gas durchströmt wird, das durch Anregungs- und/oder Entladungsreaktionen Licht emittiert, und mit einem, innerhalb des von dem Gas durchströmten Hohlraumes oder an den Hohlraum anbringbar, hygroskopisch wirkenden Mittel zur Dehydration des Gases. Insbesondere betrifft die Erfindung Excimer-Laser, ist jedoch für alle Lichtquellen mit Gasbetrieb anwendbar.

### Stand der Technik

Der Betrieb von Excimer-Lasern beruht auf dem Vermögen bestimmter Moleküle und Atome sich in einem angeregten Zustand kurzzeitig zu binden und unter Abgabe elektromagnetischer Energie in ihren vereinzelten Ursprungszustand wieder zurückzukehren. Da Excimere nur in elektronisch angeregten Zuständen existieren, ist der elektronische Grundzustand unbesetzt, weshalb bestimmte Moleküle und Atome geeignete Laserkandidaten sind. Gängige Ausgangsmoleküle und Atome für den vorbeschriebenen Anregungsprozeß sind beispielsweise zweiatomige Edelgasdimere, Edelgas-Halogen-Verbindungen, Alkalimetall-Verbindungen oder auch dreiatomige Edelgas-Halogen-Verbindungen wie beispielsweise Xe₂Cl.

Die für Excimer-Laser geeigneten Molekül-bzw. Atomverbindungen, die nachfolgend auch als Excimer-Gase bezeichnet werden, weisen Energieübergänge auf, durch die vornehmlich elektromagnetische Strahlung im ultravioletten Spektralbereich emittiert wird. Daher stellen heute Excimer-Laser die weitaus intensivsten UV-Strahlungsquellen dar. Jedoch ist zur Anregung der Excimer-Gase zur Erzeugung stimulierter Emission eine hohe Energiedichte nötig, die in Form eines intensiven, gepulsten Elektronenstrahls oder im Rahmen einer Hochspannungsentladung zugeführt wird, da der Wirkungsquerschnitt für stimulierte Emission für die einzelnen Ausgangsverbindungen innerhalb des Excimer-Gases relativ klein ist.

Bei der technischen Auslegung von Excimer-Lasem muß aus diesem Grunde ein besonders hoher Aufwand in der konstruktiven und apparativen Auslegung der für die gezielte Energiezufuhr erforderlichen Komponenten gelegt werden. Aufgrund der sehr hohen Energien, die dem Excimer-Gas zugeführt werden müssen, treten überdies systembedingt Verunreinigungen innerhalb des Excimer-Gases auf, die beispielsweise durch lokalen Elektrodenabbrand oder durch Verbindungsreaktionen zwischen dem Excimer-Gas und den einzelnen Excimer-Laser-Komponenten herrühren. Die Verunreinigungen beeinträchtigen jedoch nicht nur den Laserprozeß als solchen, sondern vermögen durch Ablagerungen an der Innenwand des das Excimer-Gas einschließenden Gasraums und insbesondere hier im Bereich der Austrittsfenster des Lasers die Strahlaustrittsintensität des Excimer-Lasers erheblich zu reduzieren. Um den im Lasergas auftretenden Verunreinigungen entgegenzutreten, werden Vorrichtungen zur Gasreinigung in den Gasstrom des Gasraumes des Excimer-Lasers eingebracht, die das Excimer-Gas von den Verunreinigungen möglichst weitgehend befreien. Überdies werden Maßnahmen getroffen, um Ablagerungen von Verunreinigungen, insbesondere an Bereichen der Austrittsfenster zu vermeiden. In bekannter Weise wird hierzu ein Gasstrom gezielt über die Austrittsfenster geleitet, der die Verunreinigungen regelrecht wegbläst.

Trotz der bisher bekannten Maßnahmen zur Steigerung der Laserleistung von Excimer-Lasem sowie deren Lebensdauer muß das Excimer-Lasergas in Abhängigkeit der Betriebsdauer ausgetauscht werden, wozu der Excimer-Laser unter arbeits- und zeitintensiven Wartungsmaßnahmen zerlegt und gereinigt werden muß. Derartige Wartungsarbeiten sind mit Kosten verbunden und führen zu einem temporären Ausfall des Systems.

Aus der DE-A-44 41 199 gehen eine Vorrichtung sowie ein Verfahren zum Reinigen von, in eine Laserkammer einzuleitenden Gase hervor, die einen, mit der Laserkammer verbundenen Vorratsbehälter vorsieht, in dem ein, die Lasergase reinigendes Mittel eingebracht ist. Insbesondere handelt es sich um ein Trockenmittel mit dem Verunreinigungen gebunden werden können.

Eine ähnliche Konstruktion ist der JP 07 106667 zu entnehmen. Hier befindet sich ein hygroskopisches Mittel ebenfalls in einem Extra-Vorratsbehälter.

### Darstellung der Erfindung

Der Erfindung liegt die Aufgabe zugrunde, die Lebensdauer von Lichtquellen, die im Gasbetrieb arbeien und insbesondere die Lebensdauer eines Excimer-Lasers zu erhöhen. Insbesondere soll erreicht werden, die für einen einwandfreien Betrieb derartiger Lichtquellen erforderlichen Wartungsmaßnahmen in zeitlich größeren Abständen, als es bisher der Fall ist, durchzuführen. Ferner ist es Aufgabe der Erfindung neben der Steigerung der Lebensdauer von Lichtquellen gemäß dem Oberbegriff des Anspruchs 1 und hierbei insbesondere die Verlängerung der Nutzungsdauer eines Excimer-Gasbefüllung, auch den Wirkungsgrad und damit verbunden die Austrittsstrahlleistung der Lichtquelle zu erhöhen. Alle vorstehenden Forderungen sollen dabei mit einem Minimum an zusätzlichen Konstruktiven Maßnahmen erreichbar sein.

Die Lösung der der Erfindung zugrundeliegenden Aufgabe ist im Anspruch 1 angegeben. Den Erfindungsgedanken vorteilhaft weiterbildende Merkmale sind Gegenstand der Unteransprüche.

Die Erfindung geht von der Überlegung aus, daß die Lebensdauer von Lichtquellen mit einer Gasfüllung und insbesondere Excimer-Laser entscheidend von Verunreinigungen abhängt. Die nachfolgenden Überlegungen beziehen sich auf Excimer-Laser, doch kann der, der Erfindung zugrundeliegende Gedanke auf alle gasbefüllten Lichtquellen angewendet werden.

Neben den im vorstehenden beschriebenen Verunreinigungen hat sich herausgestellt, daß Wasser in nur sehr geringen Konzentrationen die Einsatzdauer von Excimer-Gasen entscheidend verringert.

Bereits bei der Befüllung von Excimer-Lasern mit den entsprechenden Excimer-Gasen, die aus kommerziell erhältlichen Gasflaschen abgefüllt werden, sind Wasserkonzentrationen von 1 bis 2 ppm enthalten. Bereits derartig geringe Wasserkonzentrationen wirken sich nachteilhaft auf den gesamten Excimer-Laser-Prozeß aus.

Zudem diffundiert aufgrund bestehender Druckunterschiede zwischen dem Inneren des Gasraumes eines Excimer-Lasers und der Umgebungsluft gasförmiges Wasser sowie Sauerstoff aus der Umgebungsluft durch die Dichtungen des Lasersystems ins Innere des Lasers, wodurch schleichend die Wasserkonzentration innerhalb des Lasers erhöht wird.

Darüber hinaus lagern sich Wassermoleküle aus dem Reinigungsprozeß an metallischen Oberflächen, in Schlitzen und Ritzen der O-Ring Dichtungen ab. Selbst bei guter Passivierung der metallischen Oberflächen bleiben im ppm Bereich Wassermoleküle an der Oberfläche gebunden.

Erfindungsgemäß wird eine Lichtquelle, vorzugsweise ein Excimer-Laser mit einem das Excimer-Gas einschließenden Hohlraum, im Folgenden Gasraum, der vom Excimer-Gas durchströmt wird, derart weitergebildet, dass zur Gasanregung Hochspannungselektroden im Hohlraum vorgesehen sind, in denen das hygroskopische Mittel eingearbeitet ist.
Die der Erfindung zugrundeliegende Idee geht davon aus, daß die zur energetischen Anregung des Excimer-Gases vorgesehenen Hochspannungselektroden mit Trocknungsmittel versehen sind, die durch Sputterprozesse während des Laserbetriebes in den Gasraum freigesetzt werden und auf diese Weise vorhandene Wasseranteile an sich binden.

Werden durch die Sputterprozesse Trocknungsmittel in den Gasraum freigesetzt, die mit dem Excimer-Gas in Kontakt treten, so kann es dem Excimer-Gas vorhandene Wasseranteile entziehen. Auf diese Weise wird zum einen erreicht, daß die unmittelbar nach der Befüllung eines Excimer-Lasers mit Excimer-Gas vorhandene Wasserkonzentration bis in den ppb-Bereich und darunter reduziert werden kann, zum anderen wird durch die Gegenwart des Trocknungsmittels innerhalb des Gasraumes auch während des Betriebes des Excimer-Lasers dafür gesorgt, daß durch Dichtungsschlitze in den Gasraum eindiffundierendes Wasser sofort aus dem Excimer-Gas-Kreislauf entzogen wird.

Als Trocknungsmittel eignen sich grundsätzlich alle hygroskopisch wirkenden Mittel. Besonders geeignet als Trocknungsmittel sind Mg oder Zn, die in die Hochspannungselektroden eingearbeitet werden können.

### Kurze Beschreibung der Zeichnung

Die Erfindung wird nachstehend ohne Beschränkung des allgemeinen Erfindungsgedankens anhand eines Ausführungsbeispiels unter Bezugnahme auf die Zeichnung exemplarisch beschrieben. Es zeigt:

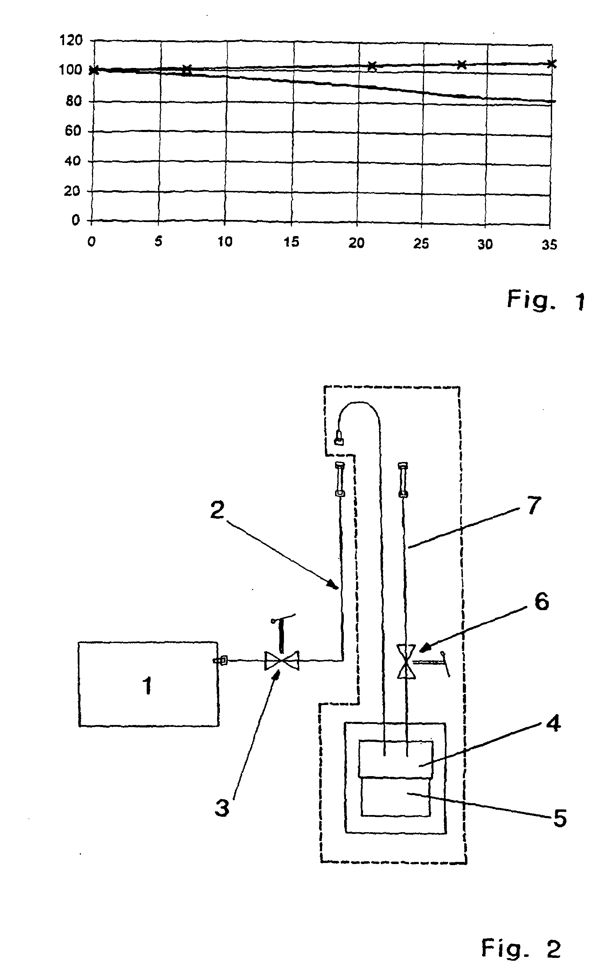

- Figur 1: Diagramm zur Darstellung der Ausgangsenergie eines Excimer-Lasers mit und ohne Trocknungsmittel.

Darstellung eines Ausführungsbeispiels und gewerbliche Anwendbarkeit In Figur 1 ist ein Diagramm dargestellt, das die Ausgangsenergie eines Excimer-Lasers in Abhängigkeit seiner Betriebsdauer zeigt. Entlang der Ordinate des Diagramms sind Prozentzahlen angegeben, die dem Verhältnis der aktuellen Ausgangsenergie in Abhängigkeit von der Ausgangsenergie, die unmittelbar nach der ersten Inbetriebnahme des Excimer-Lasers erhalten wurde, entsprechen. Auf der Ordinate ist die Versuchsdauer in Tagen angegeben.

Bei einem Excimer-Laser ohne die erfindungsgemäße Maßnahme, d.h. ohne Verwendung eines Trocknungsmittels reduziert sich die Ausgangsenergie kontinuierlich (s. hierzu die im Diagramm durchgezogene, abfallende Funktion).

In einem fünfwöchigen Betrieb stieg hingegen die Ausgangsenergie des Excimer-Lasers unter Verwendung eines Trocknungsmittels stetig um wöchentlich ca. 1 bis 2% der Startenergie an und ist nach 35 Tagen um ca. 7% gestiegen (s. hierzu ansteigender Funktionsverlauf durchsetzt mit Kreuzen).

Die Messungen haben überraschenderweise gezeigt, daß die erfindungsgemäße Maßnahme nicht nur den Wasseranteil im Excimer-Laser zu reduzieren vermag, sondern insbesondere auch zur Leistungssteigerung der Ausgangsenergie des Excimer-Lasers beiträgt.

## Patentansprüche

1. Lichtquelle (1), mit einem ein Gas einschließenden Hohlraum, der von dem Gas durchströmt wird, das durch Anregungs- und/oder Entladungsreaktionen Licht emittiert, und mit einem innerhalb des von dem Gas durchströmten Hohlraumes oder an den Hohlraum anbringbar, hygroskopisch wirkenden Mittel (5) zur Dehydration des Gases,
**dadurch gekennzeichnet, dass** zur Gasanregung Hochspannungselektroden im Hohlraum vorgesehen sind, in denen das hygroskopische Mittel eingearbeitet ist.

2. Lichtquelle nach Anspruch 1,
**dadurch gekennzeichnet, daß** Mg oder Zn in den Hochspannungselektroden eingearbeitet ist.

3. Lichtquelle nach Anspruch 1 oder 2,
**dadurch gekennzeichnet, daß** das hygroskopische Mittel derart in den Hochspannungselektroden eingearbeitet ist, daß es im Wege eines Sputterprozesses freigesetzt wird.

4. Lichtquelle nach einem der Ansprüche 1 bis 3,
**dadurch gekennzeichnet, dass** das Gas Halogene oder Halogenverbindungen aufweist.

5. Lichtquelle nach einem der Ansprüche 1 bis 4,
**dadurch gekennzeichnet, daß** die Lichtquelle ein Excimerlaser ist.

6. Lichtquelle nach einem der Ansprüche 1 bis 5,
**dadurch gekennzeichnet, daß** das Gas chlorhaltig ist.

## Claims

1. Light source (1) including a cavity enclosing a gas, through which gas flows that emits light in response to excitation and/or discharge reactions, as well as gas dehydration means (5) creating a hygroscopic effect and adapted to be mounted inside said cavity through which said gas flows or on said cavity,
**characterised in that** high-voltage electrodes are provided in said cavity for gas excitation, into which said hygroscopic means is incorporated.

2. Light source according to Claim 1,
**characterised in that** Mg or Zn is incorporated into said high-voltage electrodes.

3. Light source according to Claim 1 or 2,
**characterised in that** said hygroscopic means is incorporated into said high-voltage electrodes in such a way that it will be released by way of a sputtering process.

4. Light source according to any of the Claims 1 to 3,
**characterised in that** said gas contains halogens or halogen compounds.

5. Light source according to any of the Claims 1 to 4,
**characterised in that** the light source is an excimer laser.

6. Light source according to any of the Claims 1 to 5,
**characterised in that** said gas is chloric.

## Revendications

1. Source lumineuse (1) comprenant une cavité, qui renferme un gaz et par laquelle s'écoule du gaz qui émet de lumière en réponse aux réactions d'excitation et/ou de décharge, ainsi qu'un moyen à déshydrogéner le gaz (5), qui crée un effet hygroscopique et est apte à être monté à l'intérieur de ladite cavité, par laquelle s'écoule ledit gaz, ou à ladite cavité,
**caractérisée en ce que** des électrodes H.T. sont installées dans ladite cavité pour l'excitation du gaz, dans lesquelles est incorporé ledit moyen hygroscopique.

2. Source lumineuse selon la revendication 1,
**caractérisée en ce que** de Mg ou de Zn est incorporé dans lesdites électrodes H.T.

3. Source lumineuse selon la revendication 1 ou 2,
**caractérisée en ce que** ledit moyen hygroscopique est incorporé dans lesdites électrodes H.T. d'une façon, qu'il soit dégagé par un processus à crépitement.

4. Source lumineuse selon une quelconque des revendications 1 à 3,
**caractérisée en ce que** ledit gaz contient des de l'halogène ou des composés halogénés.

5. Source lumineuse selon une quelconque des revendications 1 à 4,
**caractérisée en ce que** la source lumineuse est un laser type excimer.

6. Source lumineuse selon une quelconque des revendications 1 à 5,
**caractérisée en ce que** ledit gaz est chloré.
